(19) **Europäisches Patentamt**

**European Patent Office**

**Office européen des brevets**

(11) **EP 0 780 602 B1**

(12) **EUROPEAN PATENT SPECIFICATION**

(45) Date of publication and mention
of the grant of the patent:
**19.06.2002 Bulletin 2002/25**

(51) Int Cl.⁷: **F16H 61/06**

(21) Application number: **96119440.4**

(22) Date of filing: **04.12.1996**

(54) **Hydraulic pressure control apparatus of automatic transmission**

Hydraulische Drucksteuerungseinrichtung für automatische Fahrzeuggetriebe

Dispositif de commande de pression hydraulique pour la transmission automatique d'un véhicule

(84) Designated Contracting States:
**DE GB SE**

(30) Priority: **19.12.1995 JP 33089595**

(43) Date of publication of application:
**25.06.1997 Bulletin 1997/26**

(73) Proprietor: **AISIN AW CO., LTD.**
**Anjo-shi Aichi-ken (JP)**

(72) Inventors:
• **Tsutsui, Hiroshi**
  **Fujii-cho, Anjo-shi, Aichi-ken (JP)**
• **Tsukamoto, Kazumasa**
  **Fujii-cho, Anjo-shi, Aichi-ken (JP)**
• **Hayabuchi, Masahiro**
  **Fujii-cho, Anjo-shi, Aichi-ken (JP)**

• **Nishida, Masaaki**
  **Fujii-cho, Anjo-shi, Aichi-ken (JP)**
• **Yamamoto, Yoshihisa**
  **Fujii-cho, Anjo-shi, Aichi-ken (JP)**
• **Kano, Toshihiro**
  **Fujii-cho, Anjo-shi, Aichi-ken (JP)**
• **Kubo, Takayuki**
  **Fujii-cho, Anjo-shi, Aichi-ken (JP)**
• **Tsuchiya, Saoto**
  **Fujii-cho, Anjo-shi, Aichi-ken (JP)**

(74) Representative: **VOSSIUS & PARTNER**
**Siebertstrasse 4**
**81675 München (DE)**

(56) References cited:
**EP-A- 0 353 771       EP-A- 0 435 376**
**DE-A- 4 240 621       US-A- 4 836 057**

**Description**

The present invention relates to a hydraulic pressure control apparatus of an automatic transmission installed in a motor vehicle and, more particularly, to a hydraulic pressure control apparatus that, for a shift, controls the hydraulic pressure on the hydraulic servos for individual friction engagement elements that change transmission paths of an automatic shift mechanism, thus reducing shift shocks.

An apparatus that controls the hydraulic pressure on a hydraulic servo to reduce shift shocks according to the preamble of claim 1 is disclosed in Japanese patent application laying-open No. SHO-63-270971. The control apparatus of an automatic transmission calculates a turbine (input) torque occurring immediately before the output of a shift signal by using turbine torque estimating means and turbine torque correcting means and, based on the calculated turbine torque and the gear ratios before and after the shift, estimates a turbine torque that will be caused at the gear ratio after the shift, and controls fluid pressure regulating means for regulating the fluid pressure on the hydraulic servo so that the turbine torque will smoothly changes, thus smoothing a torque change on the output shaft of the gear type transmission.

Although the above-mentioned control apparatus of an automatic transmission may detect a turbine torque with a high precision and estimate an accurate turbine torque occurring after a shift, it is no easy for the control apparatus to calculate a precise fluid pressure (hydraulic pressure) from the estimated turbine torque because of variations in the μ characteristics of the friction members of the friction engagement elements, piston stroke errors, and the like.

Accordingly, if the acting hydraulic pressure calculated by the control apparatus of an automatic transmission is high relative to a proper hydraulic pressure, a drop of the rotational change during the beginning period of the inertia phase becomes large and causes a shift shock. Conversely, if the acting hydraulic pressure is low relative to the proper hydraulic pressure, the start of the inertia phase delays, causing a prolonged shift process followed by a sharp change in rotational speed, thus producing a shift shock.

Accordingly, it is an object of the present invention to provide a control apparatus of an automatic transmission that solves the above-stated problems by changing the changing gradient of the hydraulic pressure in the beginning of the inertia phase, and correcting, by learning, the initial pressure and the hydraulic pressure change over the inertia phase at the beginning of the inertia phase, and thereby controlling the hydraulic pressure so that the input torque always smoothly changes.

According to the present invention as defined in claim 1, there is provided a hydraulic pressure control apparatus of an automatic transmission comprising: an automatic shift mechanism that changes over transmission paths for a speed shift by engaging and disengaging a plurality of friction engagement elements and outputs rotation thus speed-shifted to a wheel; hydraulic servos (9, 10) that engage and disengage said friction engagement elements; and a changeover valve (13, 15) that switches to supply hydraulic pressure to or discharge it from at least one of said hydraulic servos that is to actually engage and disengage at least one of said friction engagement elements, said hydraulic pressure control apparatus for an automatic transmission characterized by comprising:

pressure regulating means (SLS, SLU) for regulating hydraulic pressure to the hydraulic pressure servos that engage and disengage the friction engagement elements;
input rotational speed detection means (5) for detecting a rotational speed of said input rotation;
input torque calculation means (1a) for calculating an input torque of said automatic shift mechanism based on a running condition of a vehicle;
target hydraulic pressure calculation means (1b) for calculating a target hydraulic pressure ($P_{TA}$) in accordance with the input torque, for a condition immediately before said input rotational speed starts to change; and
hydraulic pressure control means (1c) for outputting a signal to said pressure regulating means so as to provide a first sweep section where hydraulic pressure is changed to said target hydraulic pressure with a predetermined gradient and a second sweep section where the hydraulic pressure is changed from said target hydraulic pressure with a gradient ($\delta P_{TA}$) that is less than the predetermined gradient.

According to the present invention as defined in claim 2, said first sweep section is provided with a predetermined time ($t_{TA}$) established in consideration of a hydraulic pressure response delay, and said predetermined gradient is established on the basis of said predetermined time ($t_{TA}$) and said target hydraulic pressure ($P_{TA}$).

According to the present invention as defined in claim 3, said gradient ($\delta P_{TA}$) of said second sweep section is established on the basis of a target rotation change rate ($\omega a'$) that occurs when said input rotational speed ($N_T$) changes by a predetermined amount ($dN_S$).

According to the present invention as defined in claim 4, said second sweep section extends until the rotational speed change ($\Delta N$) of said input rotation becomes a rotation change start determining rotational speed ($dN_S$) that is detectable by said input shaft rotational speed detection means (5).

According to the present invention as defined in claim 5, in an inertia phase, said hydraulic pressure control apparatus uses as a target value ($\omega a'$, $\omega t'$) a rotation change rate ($\omega'$) of said input rotational speed, and said hydraulic pressure control means is set so that said target value gradually changes during beginning and ending periods of said inertia phase.

According to the present invention as defined in claim 6, said hydraulic pressure control apparatus measures time ($t_S$) of said second sweep section, and corrects said target hydraulic pressure ($P_{TA}$) by learning in accordance with the measured time.

According to the present invention as defined in claim 7, said hydraulic pressure control apparatus detects a rotational speed change rate ($\omega s'$) of said input rotational speed at end of said second sweep section, and corrects the gradient ($\delta P_{TA}$) of said second sweep section by learning in accordance with the detected change rate.

According to the present invention as defined in claim 8, said hydraulic pressure control apparatus compares a time ($t_S$) of said second sweep section with the predetermined time ($t_{aim} + \Delta t_0$) established in consideration of a hydraulic pressure response delay, and corrects said target hydraulic pressure ($P_{TA}$) and the gradient ($\delta P_{TA}$) of said second sweep section by learning based on the comparison.

According to the present invention as defined in claim 9, said hydraulic pressure control apparatus supplies hydraulic pressure to said hydraulic servos (9, 10) so that the hydraulic servos will complete a piston stroke before said first sweep section starts, and said hydraulic pressure control apparatus detects a rotational speed change rate ($\omega s'$) of said input rotational speed and a time ($t_S$) of said second sweep section at end of said second sweep section, and corrects the piston stroke time ($t_{SE}$) of said hydraulic servos by learning in accordance with the detected rotational speed change rate and the detected time.

According to the present invention as defined in claim 10, said friction engagement elements that are engaged and disengaged disengaged include two friction engagement elements that are simultaneously operated, and the hydraulic pressure ($P_A$) of the hydraulic servo for one of said two friction engagement elements is controlled by a construction defined by any one of claims 1 to 9, and the hydraulic servo for the other one of said two friction engagement elements is controlled on the basis of a hydraulic pressure calculated using a predetermined relational equation [$T_B'$ = $f_{TB}(P_A, T_T)$, $P_B = fP_B(T_B')$] that depends on the hydraulic pressure of the hydraulic servo for said one of the two friction engagement elements.

According to the present invention as defined in claim 11, said relational equation is related to a predetermined coefficient ($S_{1U}$, $S_{2U}$, $S_1D$, $S_{2D}$) established in accordance with a tie-up degree of said one and said other one of said two friction engagement elements.

In the above-described construction, the changeover means (13,15) is switched over so that the regulate pressure provided by the pressure regulating means (SLS, SLU) is supplied to the friction engagement elements that are to be engaged or disengaged. The hydraulic pressure to the hydraulic servos is controlled as described below.

The control apparatus calculates a target hydraulic pressure ($P_{TA}$) for a condition immediately before the start of the inertia phase, in accordance with the input torque ($T_T$), calculates a predetermined gradient ($P_{TA}$-$P_{S2}/t_{TA}$) from the target hydraulic pressure and a predetermined time ($t_{TA}$), and achieves the first sweep (up or down) of the hydraulic pressure with the calculated gradient. At the time point when the hydraulic pressure becomes the target hydraulic pressure ($P_{TA}$), in other words, in a condition immediately before the start of the inertia phase when the input rotational speed starts to change, the control apparatus sets a gradient ($\delta P_{TA}$) based on a target rotation change rate occurring when the input rotational speed ($N_T$) changes by a predetermined amount ($dN_S$), and performs the second sweep (up or down) with the thus-set gradient ($\delta P_{TA}$). In this operation, the gradient of the second sweep section is more gradual than that of the first sweep section. Then, the control apparatus feedback-controls the hydraulic pressure with a predetermined gradient with reference to the input rotational speed change ($\Delta N$) when the input rotational speed change becomes the rotation change start determining rotational speed ($dN_S$) detected by the input shaft rotational speed detection means (5).

Furthermore, the control apparatus detects the time ($t_S$) of the second sweep section and the rotational speed change rate ($\omega s'$) at the end of the second sweep section, and accordingly corrects the target hydraulic pressure ($P_T$), the gradient ($\delta P_{TA}$) of the second sweep section and the target time ($t_{aim}$) of the second sweep section by learning.

Fig. 1 is a electrical block diagram according to the present invention.

Fig. 2 schematically shows a hydraulic circuit according to the present invention.

Fig. 3 is a timing chart of an upshift.

Fig. 4 is a flowchart illustrating the hydraulic pressure control at the engagement-side in an upshift.

Fig. 5(a) is a graph for calculation of a target hydraulic pressure ($P_{TA}$). Fig. 5(b) is a graph for calculation of a gradient ($\delta P_{TA}$). Fig. 5(c) is a graph for calculation of a target shift start time ($t_{aim}$). Fig. 5(d) is a graph for calculation of a shift start determining rotational speed ($dN_S$). Fig. 5(e) illustrates the shift start determining rotational speed. Fig. 5(f) illustrates calculation of a target shift time ($t_l$).

Figs. 6(a), 6(b) illustrate the method of calculating an input torque. Fig. 6(a) indicates a map of the stroke opening and the engine speed. Fig. 6(b) indicates a map of the torque ratio and the speed ratio.

Fig. 7(a) is a graph indicating the rotation change rate. Fig. 7(b) is a graph indicating the corresponding change of the rotation of the input shaft.

Fig. 8 is a flowchart illustrating the hydraulic pressure control at the release side for an upshift.

Fig. 9(a) is a graph for calculating the release-side hydraulic pressure. Fig. 9(b) illustrates the calculation of the margin rate.

Fig. 10 is a timing chart for a downshift.

Fig. 11 is a flowchart illustrating the release-side hydraulic pressure control for a downshift.

Fig. 12 is a flowchart illustrating the engagement-side hydraulic pressure control for a downshift.

Fig. 13(a) shows correction values for various states of the shift learning control. Fig. 13(b) illustrates such correction.

Figs. 14(a), 14(b) illustrate the learning control for a hydraulic pressure response delay. Fig. 14(a) indicates a state before correction. Fig. 14(b) indicates a state after correction.

An automatic transmission comprises many friction engagement elements such as clutches or brakes, and an automatic shift mechanism (not shown) for selecting a transmission path through planetary gears by suitably engaging and disengaging the friction engagement elements. The input shaft of the automatic shift mechanism is connected to the output shaft of an engage by a torque converter. The output shaft of the automatic shift mechanism is connected to the drive wheels.

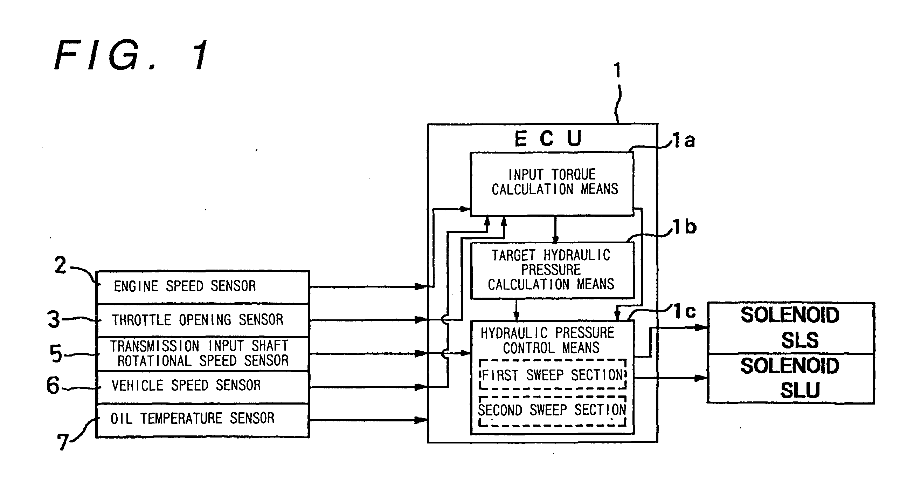

Fig. 1 is a block diagram illustrating the control of an electric system. A control unit 1 is constituted by a microcomputer and has inputs for the signals from an engine speed sensor 2, a throttle opening sensor 3, a transmission (automatic shift apparatus) input shaft rotational speed (turbine rotational speed) sensor 5, a vehicle speed (= automatic shift apparatus output shaft rotational speed) sensor 6, and an oil temperature sensor 7, and further has outputs for linear solenoid valves SLS, SLU of the hydraulic circuit. The control unit 1 comprises means 1a for calculating an input torque based on the signals from the engine speed sensor 2, the throttle opening sensor 3 and the vehicle speed sensor 6, means 1b for calculating a target hydraulic pressure for a condition immediately before the start of the inertia phase in accordance with the calculated input torque, and hydraulic pressure control means 1c for outputting a signal to the linear solenoid valves SLS, SLU so as to achieve predetermined changing of the hydraulic pressure that includes a first sweep section and a second sweep section.

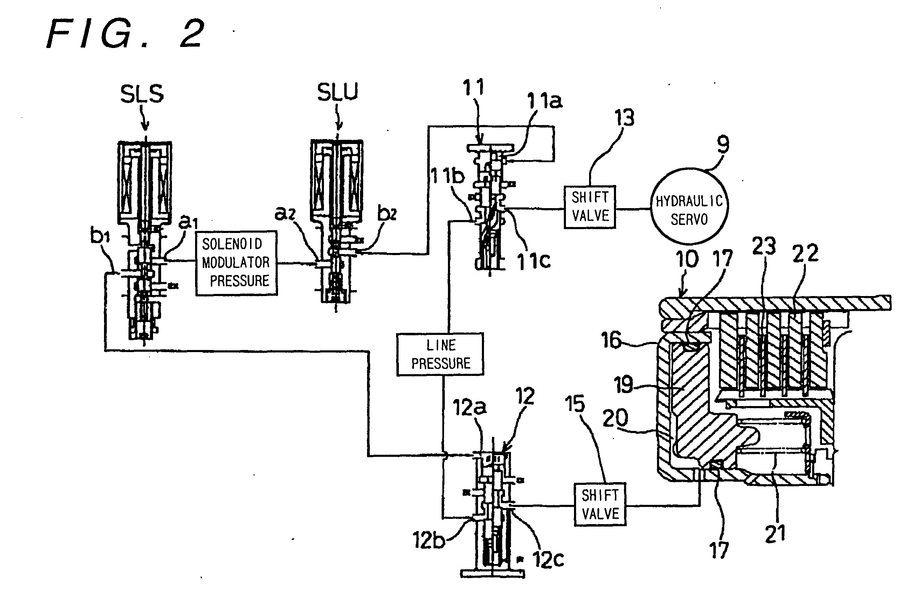

Fig. 2 schematically illustrates the hydraulic circuit. The circuit comprises the two linear solenoid valves SLS, SLU and a plurality of hydraulic servos that engage and disengage a plurality of friction engagement elements (clutches and brakes) that achieve various speeds, for example, four or five forward speeds and one rear speed, by changing over the transmission paths through the planetary gear unit of the automatic shift mechanism. Input ports $a_1$, $a_2$ of the linear solenoid valves SLS and SLU are supplied with solenoid modulator pressure. The linear solenoid valves SLS, SLU supplies control pressure from their output ports $b_1$, $b_2$ to control hydraulic chambers 11a, 12a of pressure control valves 11, 12. Input ports 11b, 12b of the pressure control valves 11, 12 are supplied with line pressure. The pressure regulated by the control pressure is suitably supplied from the output ports 11c, 12c to the hydraulic servos 9, 10 via shift valves 13, 15, respectively.

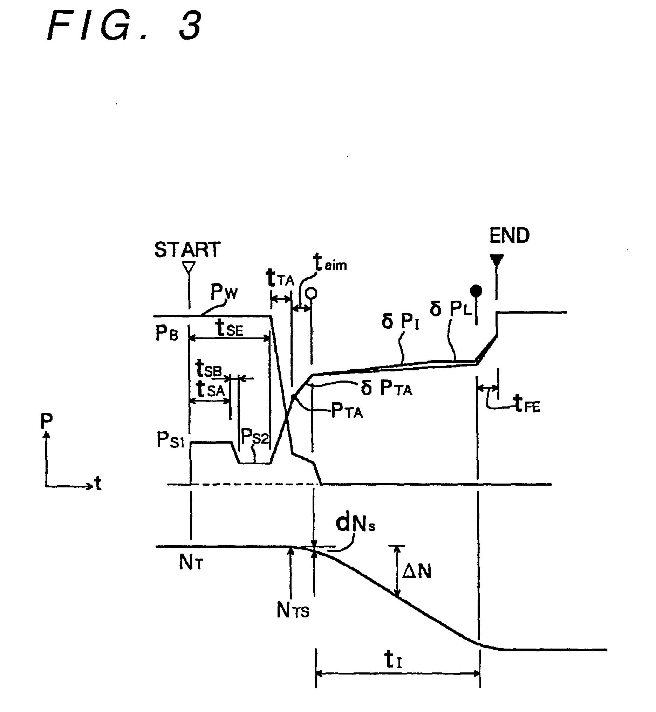

The hydraulic circuit diagram is merely for illustration of a basic concept thereof, and the hydraulic servos 9, 10 and the shift valves 13, 15 are shown for illustrative purposes. In real, the automatic shift mechanism is provided with many hydraulic servos and many shift valves for switching the hydraulic pressure to the hydraulic servos. In each hydraulic servo as shown in the hydraulic servo 10, a piston 19 is oil-tightly fitted in a cylinder 16 by an oil seal 17. The piston 19 is moved against the force from a spring 21, in accordance with the regulated pressure applied to a hydraulic chamber 20 by the control valve 12, to contact outer friction plates 22 with inner friction members 23. Although the friction plates and members are shown in the form of a clutch in Fig. 3, it should be understood that a brake may be constructed and operated in a similar manner.

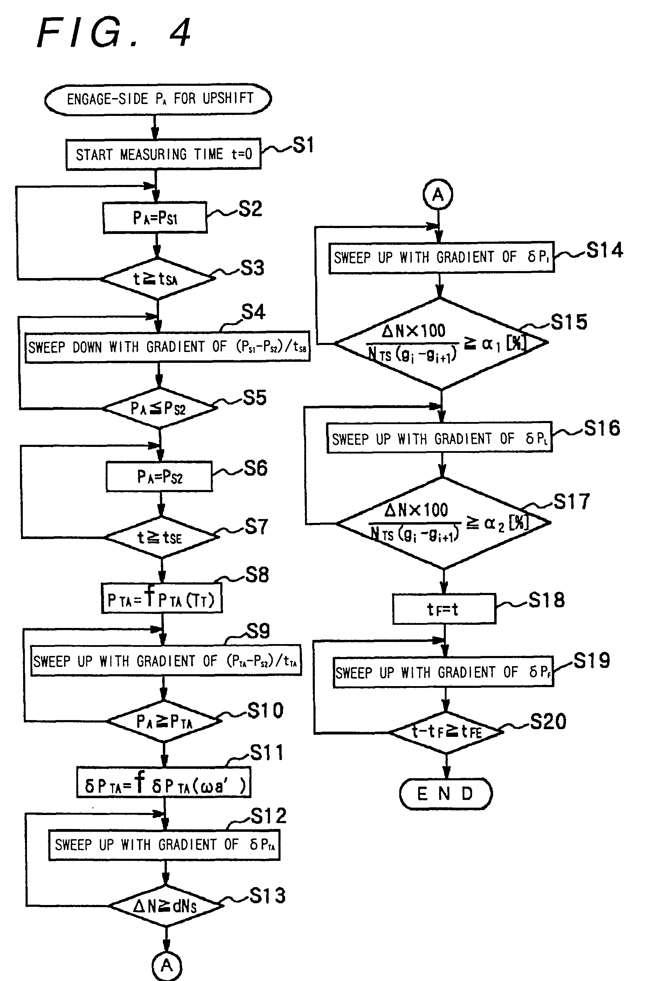

The release-side control for an upshift will be described with reference to Fig. 3 and Fig. 4.

When the control unit 1 outputs an upshift signal (START) based on the signals from the throttle opening sensor 3 and the vehicle speed sensor 6, time measurement starts (S1). Then, the control unit 1 outputs a predetermined signal to a linear solenoid valve SLS or SLU so that the hydraulic pressure to the engagement-side hydraulic servo (the engagement-side hydraulic pressure) $P_A$ becomes a predetermined pressure $P_{S1}$ (S2). The predetermined pressure $P_{S1}$ has been established to a value required to fill the hydraulic chamber 20 of the hydraulic servo. The predetermined pressure $P_{S1}$ is maintained for a predetermined time $t_{SA}$. When the predetermined time $t_{SA}$ elapses (S3), the engagement-side hydraulic pressure $P_A$ sweeps down with a predetermined gradient $[(P_{S1}-P_{S2})/t_{SB}]$. When the engagement-side hydraulic pressure PA becomes a predetermined low pressure $P_{S2}$ (S5), the down-sweep is stopped, and the pressure is held at the predetermined low pressure $P_{S2}$ (S6). The predetermined low pressure $P_{S2}$ has been established so that it remains at the piston stroke pressure or above and inhibits rotation changes on the input shaft in any conditions. The predetermined low pressure $P_{S2}$ is maintained until the measured time t indicates the elapse of the predetermined time $t_{SE}$ (S7).

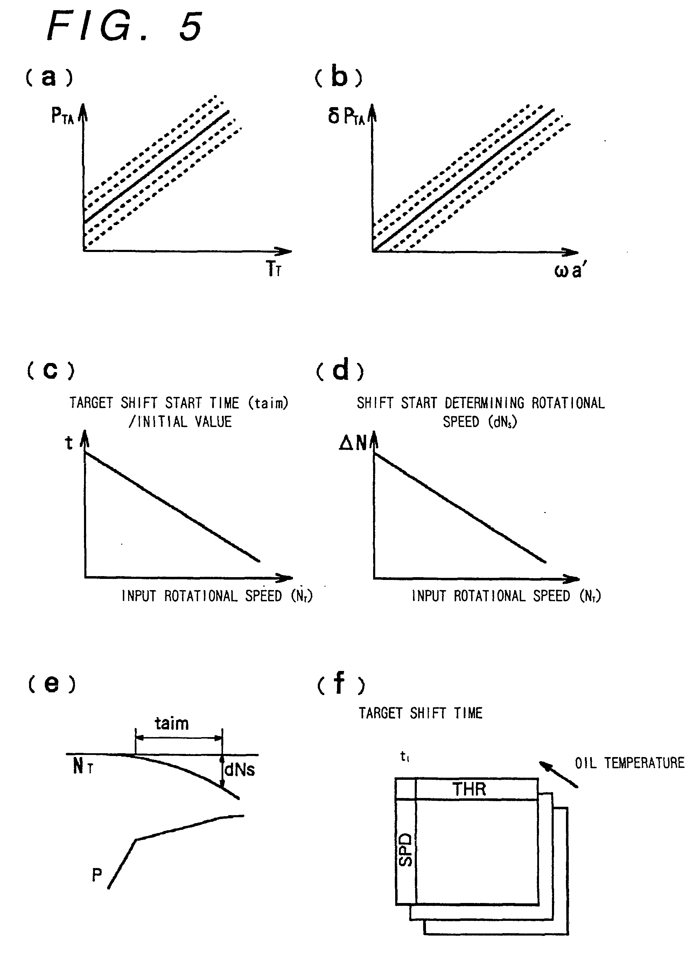

Then the control unit 1 calculates an engagement-side hydraulic pressure $P_{TA}$ for a condition immediately before the rotation change of the input rotational speed $N_T$ starts (immediately before the inertia phase starts), on the basis of a predetermined function $[P_{TA} = f_{PTA} (T_T)]$ that changes with the input torque $T_T$ as indicated in Fig. 5(a) (S8). The target engagement-side hydraulic pressure $P_{TA}$ for a condition immediately before the start of the inertia phase is calculated by first calculating an engagement-side toque divided torque TA (= $1/a \cdot T_T$, where a is a torque dividing rate) and then using an equation: $P_{TA} = (T_A/A_A) + B_A + dP_{TA}$ where $B_A$ is a piston stroke (= spring load), $A_A$ is friction plate effective radius x piston area x the number of friction plates x coefficient of friction, and $dP_{TA}$ is a hydraulic pressure corresponding to a hydraulic pressure response delay. Based on the engagement hydraulic pressure $P_{TA}$ calculated corresponding to the input torque $T_T$, for a condition immediately before the start of the inertia phase, the control unit 1 calculates a gradient from a predetermined time $t_{TA}$ $[(P_{TA} - P_{S2}) /t_{TA}]$, and sweeps up the engagement-side hydraulic pressure with the calculated gradient (S9). This up-sweep with the relatively small gradient increases the engagement torque so that the hydraulic pressure rises to a level occurring immediately before the input rotational speed starts to change, that is, to the calculated target engagement hydraulic pressure $P_{TA}$ (S10). This state immediately before the upshift is a torque state where the output shaft torque temporarily falls sharply.

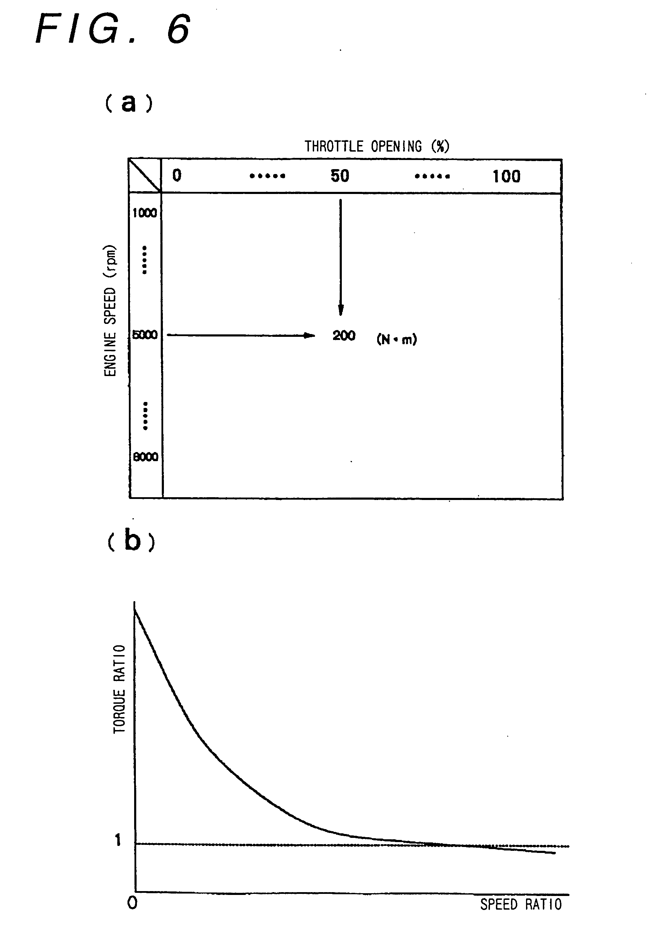

The input torque $T_T$ (= turbine torque) is determined as indicated in Figs. 6(a), 6(b), that is, by finding an engine toque corresponding to the throttle opening and the engine speed based on a map with linear interpolation, calculating a speed ratio from the input and output rotational speeds of the transmission, determining a torque ratio corresponding to the speed ratio based on a map, and multiplying the engine torque by the torque ratio.

When the target engagement hydraulic pressure $P_{TA}$ is reached, that is, when the hydraulic pressure change is considered to enter the inertia phase, in which the rotation change of the input shaft rotational speed starts, the control unit 1 calculates a change $\delta P_{TA}$ using a function $[\delta P_{TA} = f\delta P_{TA} (\omega a')]$ corresponding to the target rotation change rate ($d\omega a/dt$, expressed as $\omega a'$) that is used as a target at the start of rotation change of the input shaft rotational speed $N_T$, as indicated in Fig. 5(b) (S11). More specifically, the hydraulic pressure change $\delta P_{TA}$ is calculated by an equation: $\delta P_{TA} = (I \cdot \omega a)/(k \cdot t_{aim})$ where k is a constant, $t_{aim}$ is a target shift start time, $\omega a'$ is a target rotation change rate, and I is an inertia amount. Then, the control unit 1 sweeps up the hydraulic unit with a gradient corresponding to the hydraulic pressure change $\delta P_{TA}$ (S12). This second up-sweep is continued until the rotation change $\Delta N$ from the input shaft rotational speed $N_{TS}$ at the start of the rotation change reaches the shift start determining rotational speed $dN_S$ (S13).

The target shift start time $t_{aim}$ is set as a function of the input shaft rotational speed $N_T$ as indicated in Fig. 5 (c). The shift start determining rotational speed $dN_S$ is a minimum rotational speed that provides for detection of a rotational speed change as indicated in Fig. 5(d), and is dependent on the detection precision of the input shaft rotational speed sensor 5. Since the rotation detecting precision deteriorates in a low speed range, the rotational speed for detection needs to be sufficiently high. As the shift start determining rotational speed $dN_S$ increases, the target shift start time $t_{aim}$ also increases as indicated in Fig. 5(e).

The engagement-side hydraulic pressure change $\delta P_I$ is feedback-controlled with a change $\Delta N$ of the rotational speed based on detection of the input shaft rotational speed sensor 5. The control unit 1 then sweeps up the hydraulic pressure with a gradient of $\delta P_I$ (S14). The up-sweep with $\delta P_I$ is continued until $\alpha_1$%, for example, 70%, of the rotation change $\Delta N$ over the completion of the shift is reached (S15), that is, until $(\Delta N \times 100)/N_{TS}$ $(g_i - g_{i+1})$ becomes $\alpha$% where $N_{TS}$ is the input shaft rotational speed, $\Delta N$ is the rotational change, $g_i$ is the gear ratio before the shift, $g_{i+1}$ is the gear ratio after the shift.

When $\alpha_1$% of the rotation change is exceeded, another hydraulic pressure change $\delta P_L$ is set by feedback control based on a smooth input shaft rotational speed change $\Delta N$. The control unit 1 then sweeps up the hydraulic pressure with a gradient of $\delta P_L$ (S16). Generally, the hydraulic pressure change $\delta P_L$ provides a slightly less gradient than the hydraulic pressure change $\delta P_I$. The upsweep with the hydraulic pressure change $\delta P_L$ is continued until $\alpha_2$%, for example, 90%, of the rotational speed change up to a vicinity of the completion of the shift is reached (S17). The target upsweep shift time $t_I$ with $\delta P_I$ and $\delta P_L$ is set on the basis of a plurality of throttle opening-vehicle speed maps corresponding to different oil temperatures as shown in Fig. 5(f).

When the target shift time $t_I$ elapses, the measured time $t_F$ is set (S18). This state approximately corresponds to a state occurring after the end of the inertia phase. Then, a relatively sharp hydraulic pressure change $\delta P_F$ is established. The control unit 1 sweeps up the hydraulic pressure sharply with the hydraulic pressure change $\delta P_F$ (S19). When a time $t_{FE}$ set sufficiently for a rise to the engagement pressure elapses following the measured time $t_F$ (S20), the hydraulic pressure control at the engagement side is completed.

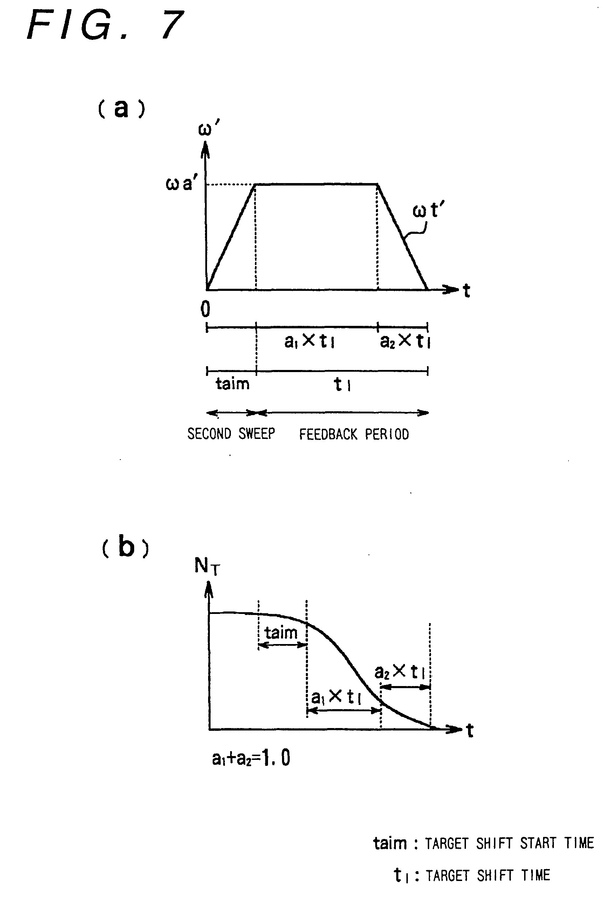

The manner of setting the values $\delta P_{TA}$, $\delta P_I$, $\delta P_L$ will be described with reference to Figs. 7(a), 7(b). The target rotation change rate $\omega a'$ for the second upsweep based on $\delta P_{TA}$ is calculated on the basis of the target shift start time $t_{aim}$ in accordance with the relation between time t and the time-differentiation (gradient) $\omega'$ of the input shaft rotational speed as indicated in Fig. 7(a). The gradual upsweep based on $\delta P_I$ is roughly fixed to the target rotation change rate $\omega a'$. This fixed state continues for $a_1$%, for example, 70%, of the target shift time $t_I$. Then, during the more gradual upsweep based on $\delta P_L$, the rotation change rate $\omega'$ gradually decreases from the target rotation change rate $\omega a'$. This decreasing state ($\omega t'$) continues for $a_2$%, for example, 30%, of the target shift time $t_I$. The aforementioned proportions

of $\delta P_I$, $\delta P_L$ are expressed as proportions $a_1$, $a_2$ ($a_1 + a_2 = 1$) of the target shift time $t_l$ whereas the flowchart of Fig. 4 expresses the proportions of $\delta P_I$, $\delta P_L$ by proportions $a_1$, $a_2$ of the rotational speed change $\Delta N$. The two expressions mean substantially the same where the proportions to the entire shift are set.

The changes of input shaft rotational speed $N_T$ in the shift beginning period ($t_{aim}$) and the shift ending period ($a_2 \times t_l$) become smooth as indicated in Fig. 7(b), on the basis of the changes of the rotation change rate $\omega'$ indicated in Fig. 7(a). The shift shock is thus reduced. The values $\delta P_{TA}$, $\delta P_I$, $\delta P_L$ are set so that the rotation change rate $\omega'$ becomes as described above, and learned as described below.

More specifically,

$$\text{since } N_{TS}(g_i - g_{i+1})/(t_{aim} + t_l),$$

$$\omega a' \times [(1/2)\, t_{aim} + a_1 \times t_l + a_2 \times t_l \times (1/2)\,] = N_{TS}\, (g_i - g_{i+1})/(t_{aim} + t_l),$$

therefore, $\omega a' =$

$$N_{TS}(g_i - g_{i+1})/[(1/2)t_{aim} + a_1 \times t_l + a_2 \times t_l \times (1/2)](t_{aim} + t_l)$$

Thus, the target rotation change rate is calculated from the target shift start time $t_{aim}$ and the target shift time $t_l$.

$$\text{If } t = t_{aim} \text{ to } t_{aim} + a_1 \times t_l, \text{ then } \omega t' = wa$$

$$\text{If } t = t_{aim} + a_1 \times t_l \text{ to } t_{aim} + a_1 \times t_l + a_2 \times t_l,$$

$$\text{then } \omega t' = \omega a' - (\omega a'/a_2 \times t_l) \times (t - t_{aim} - a_1 \times t_l)$$

The control of the release-side hydraulic pressure $P_B$ for an upshift as described above will be described with reference to Figs. 3 to 8. Although Fig. 3 indicates the engagement-release simultaneous control, that is, so-called clutch-to-clutch control, what is indicated therein also holds for control at the engagement-side alone.

The control unit 1 outputs a shift instruction so that time measurement for the release-side hydraulic pressure control starts simultaneously with that for the engagement-side hydraulic pressure control (S21). A high pressure $P_W$ provided by the engaging pressure is supplied as the release-side hydraulic pressure $P_B$ (S22). The supply of the high pressure $P_W$ is held for a time $t_{SE}$ until the first up-sweep starts (S23).

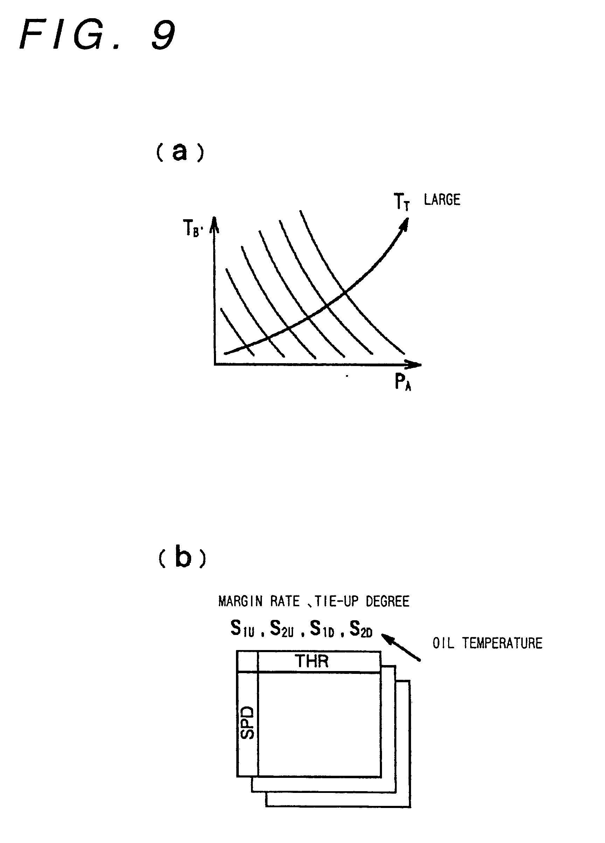

Then the control unit 1 calculates a release-side torque $T_B'$ using the engagement-side hydraulic pressure $P_A$ and a function $[T_B' = f_{TB}(P_A, T_T)]$ of input torque $T_T$ (S24) as shown in Fig. 9 (a). The margin rates $S_{1U}$, $S_{2U}$ are then considered ($T_B = S_{1U} \times T_B' + S_{2U}$), and the release-side torque $T_B$ is calculated (S25). A release-side hydraulic pressure $P_B$ is calculated from the release-side torque $T_B$ $[P_B = f_{PB}(T_B)]$ (S26). More specifically, the torque $T_A$ divided to the engagement-side friction elements engaging is calculated as $[T_A = A_A + P_A + B_A]$ where $A_A$ is effective radius x piston = area x number of plates x coefficient of friction, and $B_B$ is piston stroke pressure. Using the torque $T_A$, the torque $T_B'$ divided to the release-side friction elements is calculated as $[T_B' = (1/b)\, T_T - (a/b)T_A]$ where b is the release-side torque division, a is the engagement-side torque division, and $T_T$ is input shaft torque. Using the margin rates (tie-up degrees) $S_{1U}$, $S_{2U}$, the control unit 1 sets a tie-up degree with respect to the engagement-side friction elements, with consideration of the drive feels, and then calculates a release-side torque $T_B$ as $[T_B = S_{1U} \times T_B' + S_{2U}]$. The margin rates $S_{1U}$, $S_{2U}$ are established by a plurality of throttle opening-vehicle speed maps selectively used corresponding to different oil temperatures as shown in Fig. 9(b), so that they agree with the driver's taste. The margin rates are normally set within ranges of $S_{1U} > 1.0$, $S_{2U} > 0.0$. Furthermore, the control unit 1 calculates from the release-side torque $T_B$ involving the margin rates a release-side hydraulic pressure $P_B$ as $[P_B = (T_B/A_B) + B_B]$ where $A_B$ is the release-side friction element effective radius x piston area x number of plates x coefficient of friction, $B_B$ is release-side piston stroke pressure.

Since the down-sweep with the thus-calculated release-side hydraulic pressure $P_B$ is dependent on the engagement-side hydraulic pressure $P_A$, the down-sweep has a two-gradient slope that bends at the start of the inertia phase ($t_{TA}$) at which the input shaft rotational speed starts to change, that is, it includes a relatively steep down-sweep corresponding to the first up-sweep at the engagement side, and a relatively gradual down-sweep corresponding to the second up-sweep at the engagement side. Similarly to the up-sweep at the engagement side, the' down-sweep at the release side continues until the input shaft rotation change $\Delta N$ becomes the predetermined rotation change start determining rotational speed $dN_s$ (S27). Then the control unit 1 sets a release-side hydraulic pressure change $\delta P_E$, and performs a down-sweep with the set hydraulic pressure change (S28). The down-sweep continues until the release-side hydraulic pressure $P_B$ becomes 0 (S29). The hydraulic pressure control at the release side is thus completed.

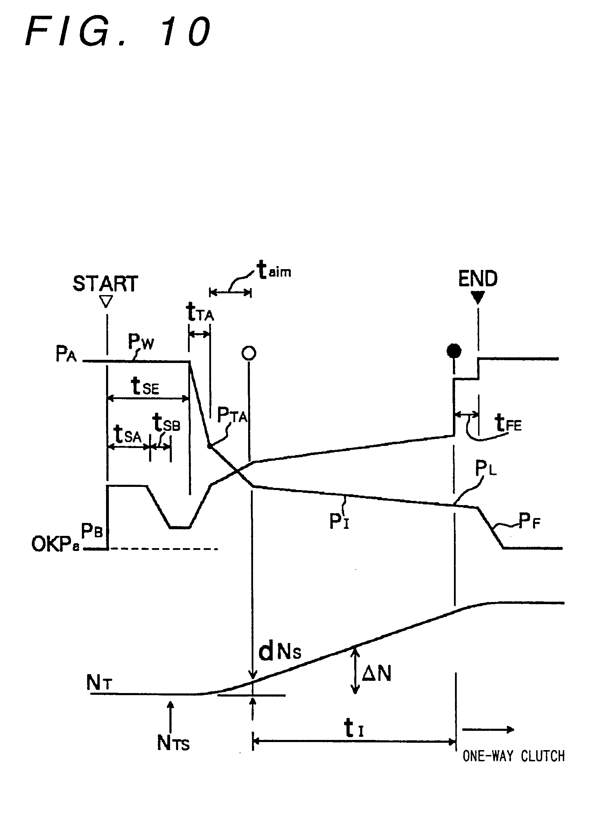

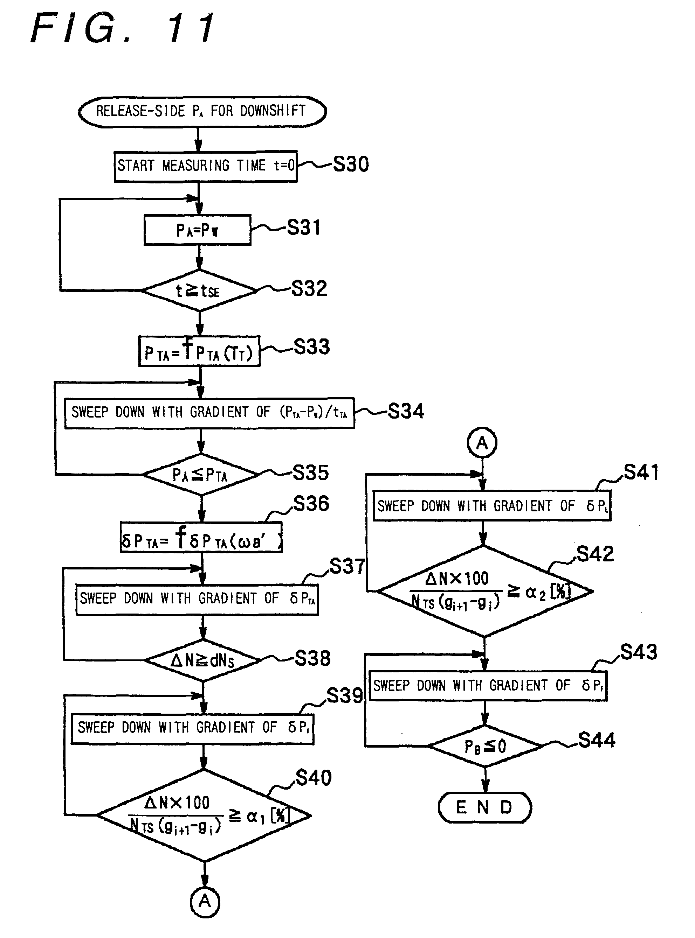

The control of the release-side hydraulic pressure $P_A$ during a downshift will be described with reference to Fig. 10 and Fig. 11. For a downshift, the release-side hydraulic pressure is the main object of the control while the engagement-side hydraulic pressure is controlled depending on the release-side hydraulic pressure, in contrast to the control for an upshift where the engagement-side hydraulic pressure is the main object of control while the release-side hydraulic pressure is controlled depending on the engagement-side hydraulic pressure as described above.

First, the control unit 1 outputs a downshift instruction so that the time measurement starts (S30). The release-side hydraulic pressure $P_A$ is a predetermined engaging pressure $P_W$ (S31). This state of the hydraulic pressure is continued for a predetermined time $t_{SE}$, considering a hydraulic pressure rise time ($t_{SA} + t_{SB}$) (S32).

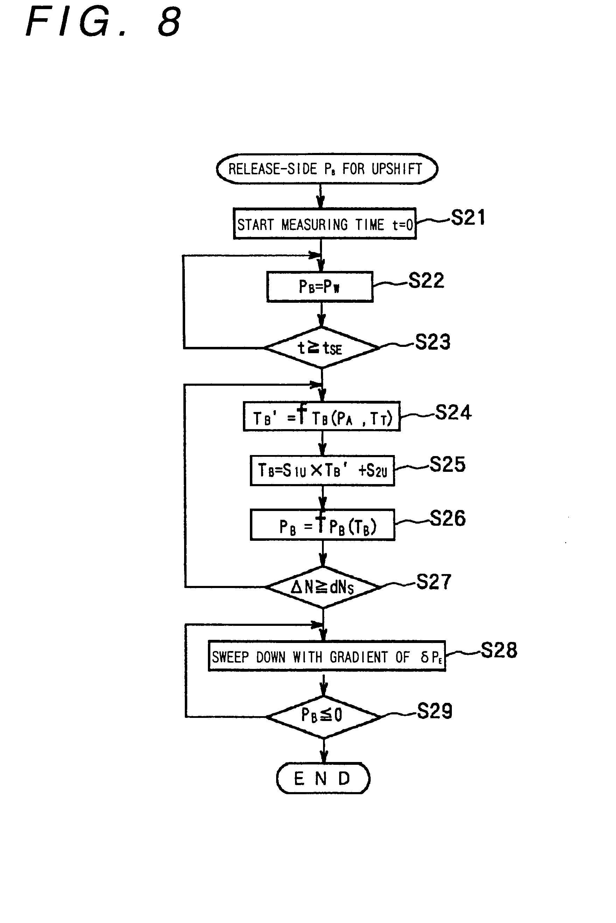

Then the control unit 1 calculates a release-side hydraulic pressure $P_{TA}$ occurring when the input shaft rotational speed starts to change (when the inertia phase starts) from the function [$P_{TA} = fP_{TA}(T_T)$] of the input indicated in Fig. 5(a) (S33). More specifically, the release-side torque $T_A$ is calculated as [$T_A = (1/a)T_T - (b/a)\{S_{2D}/(1+S_{1D})\}$] where $S_{1D}$, $S_{2D}$ are margin rates for downshift. From the torque $T_A$, a target hydraulic pressure $P_{TA}$ is calculated as [$P_{TA} = (T_A/A_A) + B_A + \delta P_{TA}$]. The margin rates $S_{1D}$, $S_{2D}$ are selected from a map as indicated in Fig. 8(b). They are normally set within ranges of $S_{1D} < 1.0$, $S_{2D} > 0.0$. Then the control unit 1 determines a gradient to the target hydraulic pressure $P_{TA}$ based on a predetermined time $t_{TA}$ as [$(P_{TA} - P_W)/t_{TA}$], and performs a (first) down-sweep with the gradient (S34). The first down-sweep, that is, a relatively steep down-sweep, continues until the release-side hydraulic pressure $P_A$ becomes the target hydraulic pressure $P_{TA}$ immediately before the start of the inertia phase (S35).

Then the control unit 1 calculates a release-side hydraulic pressure change $\delta P_{TA}$ based on the function [$\delta P_{TA} = f\delta_{PTA}(\omega a')$] as indicated in Fig. 5(b) (S36). More specifically, the hydraulic pressure change $\delta P_{TA}$ is calculated as [$\delta P_{TA} = (I/k)(\omega a/\{t_{aim}(1 + S_{1D})\})$]. The control unit 1 then performs a (second) down-sweep with the gradient of the hydraulic pressure change $\delta P_T$ (S37). The down-sweep continues from the input shaft rotational speed $N_{TS}$ occurring before the shift starts, to the shift start determining rotational speed $dNS$ at which a rotation change $\Delta N$ is detected with a predetermined precision (S38). The second down-sweep continuing until the target shift start time $t_{aim}$ has a more gradual gradient than the first down-sweep.

Then the control unit 1 performs the down-sweep with the gradient of a predetermined hydraulic pressure change $\delta P_I$, by feedback control while detecting a rotational speed change $\Delta N$ based on the detection by the input shaft rotational speed sensor. The down-sweep is continued until the rotational speed change reaches $\alpha_1\%$ of the total rotational speed change up to the completion of the shift (S40). After that, a down-sweep with a more gradual gradient of the hydraulic pressure change $\delta P_L$ is performed by similar feedback control (S41). This down-sweep is continued until $\alpha_2\%$ of the total rotational speed change.

After the completion of the down-sweep to $\alpha_2\%$, the control unit 1 sets a hydraulic pressure change $\delta P_F$ having a relatively steep gradient, and performs a down-sweep with the gradient (S43). When the release-side hydraulic pressure $P_B$ becomes 0, the release-side hydraulic pressure control for the downshift is completed (S44).

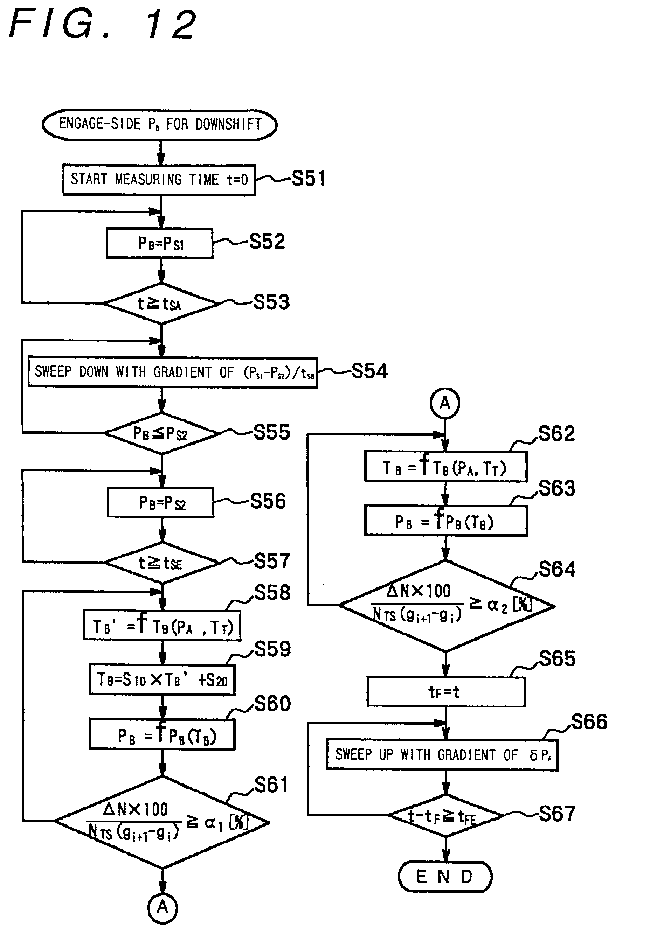

The control of the engagement-side hydraulic pressure $P_B$ for a downshift will be described with reference to Fig. 10 and Fig. 12. The initial control steps S51-S57 are the same as steps S1-S7 of the engagement-side hydraulic pressure control during an upshift, and will not be described again.

When the control enters the torque phase after the initial control steps, the control unit 1 calculates an engagement-side torque $T_B'$ based on the release-side hydraulic pressure $P_A$ and a function [$T_B' = f_{TB}(P_A, T_T)$] of input torque (S58) as indicated in Fig. 9(a). Then, considering the margin rates, the control unit 1 calculates an engagement-side torque $T_B$ as [$T_B = S_{1D} \times T_B' + S_{2D}$] (S59). From the engagement-side torque $T_B$, an engagement-side hydraulic pressure $P_B$ is calculated as [$P_B = f_{PB}(T_B)$] (S60). More specifically, the engagement-side hydraulic pressure $P_B$ is calculated as [$T_A = A_A \times P_A + B_A$] --> [$T_B' = (1/b)T_T - (a/b)T_A$] --> [$T_B = S_{1D} \times T_B' + S_{2D}$] --> [$P_B = (T_B/A_B) + B_B$], as in the calculation of the release-side hydraulic pressure for an upshift. Since the hydraulic pressure $P_B$ is dependent on the release-side hydraulic pressures based on the first down-sweep, the second down-sweep and the down-sweep with $\delta P_I$, the hydraulic pressure $P_B$ undergoes the first up-sweep with a relatively steep gradient, the second up-sweep with a relatively gradual gradient, and the third up-sweep with a more gradual gradient corresponding to $\delta P_I$, and continues up to $\alpha_1\%$ of the total input shaft rotational speed change (S61).

The changeover of engagement of the friction engagement elements is nearly completed by $\alpha_1\%$, for example, 70%, is reached. For the remaining control process, the control unit 1 calculates an engagement-side torque $T_B$ [$= f_{TB}(P_A, T_T)$] (S62) and performs control based on the engagement-side hydraulic pressure $P_B$ [$= f_{PB}(T_B)$] determined from the engagement-side torque $T_B$ without involving margin rates (S63). More specifically, the engagement-side hydraulic pressure $P_B$ that does not involves margin rates (tie-up degrees) is calculated as $[T_A = A_A \times P_A + B_B]$ --> $[T_B = (1/b)(T_T) - (a/b)T_A]$ --> $[P_B = (T_B/A_B) + B_B]$, and control is performed based on the engagement-side hydraulic pressure $P_B$, dependent on the release-side hydraulic pressure, until $\alpha_2\%$, for example, 90%, of the total input shaft rotational speed change is reached (S64).

The time $t_F$ at the completion of $\alpha_2\%$ is stored (S65). Then, the up-sweep with a relatively steep hydraulic pressure change $\delta P_F$ is performed (S66). After the target set time $t_I$ set based on a map as indicated in Fig. 5(f), for example, when a predetermined time $t_{FE}$ corresponding to the engagement of the one-way clutch elapses, the engagement-side hydraulic pressure control for the downshift is completed (S67).

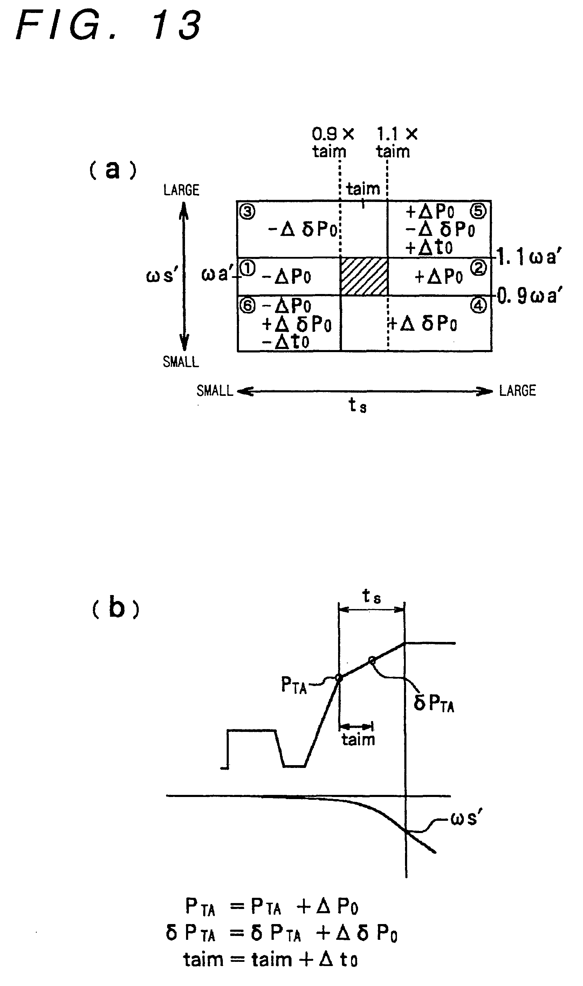

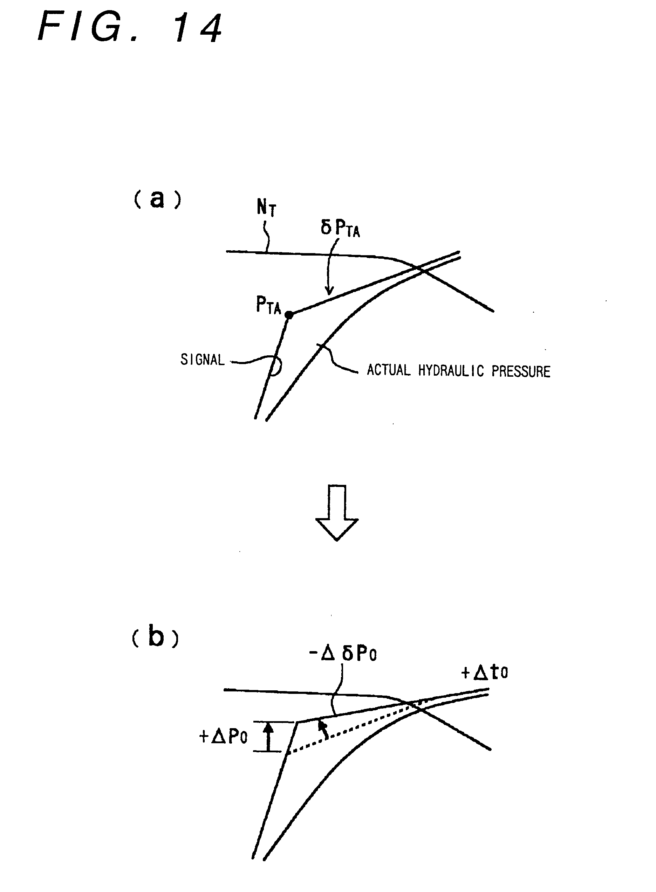

The learning control of the above-described shift control will be described with reference to Figs. 13, 14.

If a permissible range of 0.9 x $t_{aim}$ to 1.1 x $t_{aim}$ is set with respect to the target shift start time $t_{aim}$, and a permissible range of $0.9\omega a'$ to $1.1\omega a'$ is set with respect to the target rotation change rate $\omega a'$ as shown in Fig. 13(a), there exist patterns 1 to 6 outside the permissible range (the shadowed central section). As shown in Fig. 13(b), if the target hydraulic pressure $P_{TA}$ for the time of start of the input shaft rotation change (start of the inertia phase) is corrected to $[P_{TA} = P_{TA} + \Delta P_0]$, and the gradient $\delta P_{TA}$ of the second up-sweep (or down-sweep) is corrected to $[\delta P_{TA} = \delta P_{TA} + \delta\Delta P_0]$, and the target shift start time $t_{aim}$ is corrected to $[t_{aim} = t_{aim} + \Delta t_0]$, then the values $\Delta P_0$, $\delta\Delta P_0$ and $\Delta t_0$ are corrected as indicated in patterns 1 to 6.

If the engaging force occurring with respect to the hydraulic pressure is made too large or too small by variations in the piston stroke, the return spring load, the friction coefficients and the like, the control unit 1 corrects the hydraulic pressure $P_{TA}$ for a condition immediately before the start of the second sweep ($\Delta P_0$). More specifically, if the rotation change rate $\omega s'$ is within the permissible range ($0.9\omega a' \leq \omega s' \leq 1.1\omega a'$) and the time before the start of shift is short ($t_s < 0.9t_{aim}$), the target hydraulic pressure $P_{TA}$ is corrected to a reduced level ($P_{TA} = P_{TA} - \Delta P_0$) as shown in pattern 1. If the rotation change rate $\omega s'$ is within the permissible range ($0.9\omega a' \leq \omega s' \leq 1.1\omega a'$) and the time before the start of shift is long ($t_s > 1.1t_{aim}$), the target hydraulic pressure $P_{TA}$ is corrected to an increased level ($P_{TA} = P_{TA} + \Delta P_0$) as shown in pattern 2. The time $t_S$ is calculated as $[t_s = t_{TE} - t_{TS}]$ where $t_{TS}$ is time at which the hydraulic pressure $P_A$ becomes the target hydraulic pressure $P_{TA}$, and $t_{TE}$ is time at which the rotation change $\Delta N$ becomes detectable ($\Delta N \geq dN_S$). From the equation $P_{TA} = (T_A/A_A) + B_A + \delta P_{TA}$, corrected hydraulic pressures at the engagement-side and release-side friction engagement elements are calculated. Then an average of number n of such calculated values is calculated to determine a corrected hydraulic pressure.

If the rotation change is made too large or too small with respect to the hydraulic pressure change (increase or decrease) by variations in the inertia (I) amount, the friction coefficients and the like, the control unit 1 corrects the sweep gradient $\delta P_{TA}$ ($\Delta\delta P_0$). More specifically, after learning the rotation change rate $\omega s'$ occurring when the input shaft rotational speed change becomes the rotation change start determining rotational speed, if $1.0\omega a' < \omega s'$ and $t_s \leq 1.1t_{aim}$ then the sweep gradient is corrected to a more gradual gradient ($\delta P_{TA} = \delta P_{TA} - \Delta\delta P_0$) as shown in pattern 3. If $0.9\omega a' > \omega s'$ and $t_s > 0.9t_{aim}$, then the sweep gradient is corrected to a steeper gradient ($\delta P_{TA} = \delta P_{TA} + \Delta\delta P_0$) as shown in pattern 4. The inertia amount I is corrected using the aforementioned equation $[\delta P_{TA} = (I/A_A \cdot a) \cdot (\omega a'/t_{aim})]$. An average of number n of such values is calculated to determine a corrected value.

If both the rotation change rate $\omega s'$ and the target time $t_S$ become outside the permissible ranges because of a too large or too small hydraulic pressure response delay, the control unit 1 corrects the aforementioned sweep initial pressure $P_{TA}$, sweep gradient $\delta P_{TA}$ and target shift start time $t_{aim}$ ($\Delta P_0$, $\Delta\delta P_0$, $\Delta t_0$). If $1.1\omega a' < \omega s'$ and $t_S > 1.1t_{aim}$, the control unit 1 corrects the initial pressure $P_{TA}$ to an increased level, the sweep gradient $\delta P_{TA}$ to a reduced value, and the target time $t_{aim}$ to an increased time length ($P_{TA} = P_{TA} + \Delta P_0$, $\delta P_{TA} = \delta P_{TA} - \Delta\delta P_0$, $t_{aim} = t_{aim} + \Delta t_0$) as shown in pattern 5. If $0.9\omega a' > \omega s'$ and $t_S < 0.9t_{aim}$, the control unit 1 corrects the initial pressure $P_{TA}$ to an increased level, the sweep gradient $\delta P_{TA}$ to an increased value, and the target time $t_{aim}$ to a shortened time ($P_{TA} = P_{TA} - \Delta P_0$, $\delta P_{TA} = \delta P_{TA} + \Delta\delta P_0$, $t_{aim} = t_{aim} - \Delta t_0$) as shown in pattern 6. In patterns 5, 6 based on the hydraulic pressure response delay, learning is performed considering a hydraulic pressure response delay as well as the target time $t_{aim}$. If the hydraulic pressure response delay is not considered, repeated learning of target times $t_{aim}$ will only fail to achieve a target time within a range of the shadowed central section. If a hydraulic pressure response delay ($d_{PTA}$) is large and causes a slow rise of the actual hydraulic pressure though the signal value from the control unit 1 has risen to the initial pressure $P_{TA}$ and an up-sweep with a sweep gradient of $\delta P_{TA}$ has been instructed as indicated in Fig. 13(a), the control unit 1 corrects the initial pressure $P_{TA}$ to an increased level ($+\Delta P_0$) and correspondingly corrects the sweep gradient $\delta P_{TA}$ to a reduced value ($-\Delta\delta P_0$) and, further, corrects the target time $t_{aim}$ to an increased time ($\Delta t_0$). Then the control unit 1 determines a corrected value based on an average of number n of values as described above.

If the piston stroke does not reach a predetermined value or it exceeds the value before the first sweep starts, that is, if the conditions are outside what are covered by the table of Fig. 13(a), correction is performed by learning the first fill time $t_{SE}$. If $\omega s' > \omega_{max}$ and $(t_{TE} - t_{TS}) \geq t_{Smax}$ where $t_{TS}$ is time at which the hydraulic pressure $P_A$ becomes the sweep initial pressure $P_{TA}$ ($P_A = P_{TA}$), and $t_{TE}$ is time at which the input shaft rotational speed $\Delta N$ becomes the change start determining rotational speed $dN_S$ ($\Delta N \geq dN_S$), and $\omega s'$ is the rotation change rate at the time $t_{TE}$, the correction is performed in such a direction that the time $t_{SE}$ up to the start of the first sweep will increase ($t_{SE} = t_{SE} + \Delta t_{SE0}$). If $t_{TE}$

$\leq t_{SE}$, the correction is performed in such a direction that the time $t_{SE}$ will decrease ($t_{SE} = t_{SE} - \Delta t_{SE0}$). In the aforementioned equations, $\omega'_{max}$ is a predetermined maximum rotation change rate, and $t_{Smax}$ is a predetermined maximum time for the second sweep.

Effects of the Invention

According to the present invention as defined in claim 1, the hydraulic pressure shifts from the first sweep section to the second sweep section with a small gradient as the inertia phase starts, the control apparatus quickly starts a shift and smoothes the torque fluctuation during the shift, preventing a shift shock that would otherwise be caused by an excessively high hydraulic pressure and preventing a prolonged shift process that would otherwise be caused by an excessively low hydraulic pressure.

According to the present invention as defined in claim 2, since the gradient of the first sweep section is established on the basis of a predetermined time set in consideration of a hydraulic pressure response delay, the control apparatus is able to reduce the errors caused by the response delay of hydraulic pressure and to control the second sweep section that follows.

According to the present invention as defined in claim 3, since the gradient of the second sweep section is set using as a target value the rotation change rate occurring when the input rotational speed changes by a predetermined amount, the control apparatus improves the follow-up of the actual rotation change rate to the target value and thus achieves precise hydraulic pressure control without causing shift shocks.

According to the present invention as defined in claim 4, since the second sweep section continues until the actual rotational speed change becomes the rotation change start determining rotational speed that can be detected, the control apparatus is able to always detect the rotational speed with a high precision regardless of input rotational speeds, thus achieving reliable and precise learning correction control and feedback control.

According to the present invention as defined in claim 5, since the rotational speed changes in the beginning and ending periods of the inertia phase are smoothed, the control apparatus reduces shift shocks.

According to the present invention as defined in claim 6, since variations in the time of the second sweep section caused by various variations are corrected by learning the target hydraulic pressure of the first sweep section, the control apparatus improves the shift feels.

According to the present invention as defined in claim 7, since variations in the rotation change rate during the second sweep section caused by various variations are corrected by learning the gradient of the first sweep section, the control apparatus reduces the shift shocks occurring at the start of the inertia phase.

According to the present invention as defined in claim 8, since the predetermined time is established in consideration of the hydraulic pressure response delay, the control apparatus performs appropriate learning and correction even if the hydraulic pressure response delay is too large or too small.

According to the present invention as defined in claim 9, the control apparatus is able to learn and control the piston stroke time even if the piston stroke achieved before the start of the first sweep section is shorter or longer than a predetermined stroke, thus preventing a hydraulic pressure response delay despite an excessively short or long piston stroke and preventing shift shocks at the start of the inertia phase.

According to the present invention as defined in claim 10, since a second one of the hydraulic servos for the friction engagement elements is controlled depending on the hydraulic pressure control of the first one of the hydraulic servos for the friction engagement elements, the control apparatus simplifies the hydraulic pressure control performed by simultaneously switching over the friction engagement elements (that is, so-called "clutch-to-clutch" changeover), thus reducing the required memory capacity and facilitating cost reduction. Furthermore, since the relation between the engagement-side and release-side hydraulic pressure servos is maintained in a predetermined state, the control apparatus prevents shift shocks that would otherwise be caused by engine speed rise or tie-up resulting from the failure of properly-related setting of hydraulic pressures as can be seen in a system that controls the hydraulic servos independently from each other.

According to the present invention as defined in claim 11, since the tie-up degree can be changed merely by changing the predetermined coefficient, the control apparatus facilitates the calibration, increases the freedom in varying the predetermined coefficient, and enables appropriate control that agrees with the driver's tastes (for example, appropriate feels caused by throttle changes with a fixed input torque).

**Claims**

**1.** A hydraulic pressure control apparatus of an automatic transmission comprising: an automatic shift mechanism that changes over transmission paths for a speed shift by engaging and disengaging a plurality of friction engagement elements and outputs rotation thus speed-shifted to a wheel; hydraulic servos (9,10) that engage and disengage said friction engagement elements; and a changeover valve (13,15) that switches to supply hydraulic pressure to or discharge it from at least one of said hydraulic servos that is to actually engage and disengage at least one of said friction engagement elements, said hydraulic pressure control apparatus for an automatic transmission

comprising:

pressure regulating means (SLS,SLV) for regulating hydraulic pressure to the hydraulic pressure servos that engage and disengage the friction engagement elements;
input rotational speed detection means (5) for detecting a rotational speed of said input rotation; input torque calculation means (1a) for calculating an input torque of said automatic shift mechanism based on a running condition of a vehicle;

**characterized by**

target hydraulic pressure calculation means (16) for calculating a target hydraulic pressure ($P_{TA}$) in accordance with the input torque, for a condition immediately before said input rotational speed starts to change; and hydraulic pressure control means (1c) for outputting a signal to said pressure regulating means so as to provide a first sweep section where hydraulic pressure is changed to said target hydraulic pressure with a predetermined gradient and a second sweep section where the hydraulic pressure is changed from said target hydraulic pressure with a gradient ($\delta P_{TA}$) that is less than the predetermined gradient.

2. A hydraulic pressure control apparatus of an automatic transmission according to claim 1, wherein said first sweep section is provided with a predetermined time ($t_{TA}$) established in consideration of a hydraulic pressure response delay, and said predetermined gradient is established on the basis of said predetermined time and said target hydraulic pressure ($P_{TA}$).

3. A hydraulic pressure control apparatus of an automatic transmission according to claim 1 or 2, wherein said gradient ($\delta P_{TA}$) of said second sweep section is established on the basis of a target rotation change rate ($\omega a'$) that occurs when said input rotational speed ($N_T$) changes by a predetermined amount ($dN_S$).

4. A hydraulic pressure control apparatus of an automatic transmission according to any one of claims 1 to 3, wherein said second sweep section extends until the rotational speed change ($\Delta N$) of said input rotation becomes a rotation change start determining rotational speed ($dN_S$) that is detectable by said input shaft rotational speed detection means (5).

5. A hydraulic pressure control apparatus of an automatic transmission according to any one of claims 1 to 4, wherein in an inertia phase, said hydraulic pressure control apparatus uses as a target value ($\omega a',\omega t'$) a rotation change rate ($\omega'$) of said input rotational speed, and wherein said hydraulic pressure control means is set so that said target value gradually changes during beginning and ending periods of said inertia phase.

6. An apparatus according to claim 4 or 5, wherein said
hydraulic pressure control apparatus measures time (ts) of said second sweep section, and corrects said target hydraulic pressure ($P_{TA}$) by learning in accordance with the measured time.

7. An apparatus according to any one of claims 4 to 6, wherein said
hydraulic pressure control apparatus detects a rotational speed change rate ($\omega s'$) of said input rotational speed at end of said second sweep section, and corrects the gradient ($\delta P_{TA}$) of said second sweep section by learning in accordance with the detected change rate.

8. An apparatus according to any one of claims 4 to 7, wherein said
hydraulic pressure control apparatus compares a time ($t_S$) of said second sweep section with the predetermined time ($T_{aim} + \Delta t_0$) established in consideration of a hydraulic pressure response delay, and corrects said target hydraulic pressure ($P_{TA}$) and the gradient ($\delta P_{TA}$) of said second sweep section by learning based on the comparison.

9. An apparatus according to any one of claims 4 to 8, wherein said
hydraulic pressure control apparatus supplies hydraulic pressure to said hydraulic servos (9, 10) so that the hydraulic servos will complete a piston stroke before said first sweep section starts, and wherein said hydraulic pressure control apparatus detects a rotational speed change rate ($\omega s'$) of said input rotational speed and a time (ts) of said second sweep section at end of said second sweep section, and corrects the piston stroke time ($t_{SE}$) of said hydraulic servos by learning in accordance with the detected rotational speed change rate and the detected time.

10. A hydraulic pressure control apparatus of an automatic transmission, wherein said friction engagement elements that are engaged and disengaged include two friction engagement elements that are simultaneously operated, and the hydraulic pressure ($P_A$) of the hydraulic servo for one of said two friction engagement elements is controlled by a construction defined by any one of claims 1 to 9, and the hydraulic servo for the other one of said two friction engagement elements is controlled on the basis of a hydraulic pressure calculated using a predetermined relational equation ($T_{B'}$, $P_B$, $S_{58}$) that depends on the hydraulic pressure of the hydraulic servo for said one of the two friction engagement elements.

11. A hydraulic pressure control apparatus of an automatic transmission according to claim 10, wherein said relational equation is related to a predetermined coefficient ($S_{1V}$, $S_{2V}$, $S_{1D}$, $S_{2D}$) established in accordance with a tie-up degree of said one and said other one of said two friction engagement elements.

**Patentansprüche**

1. Hydraulische Drucksteuerungseinrichtung für ein automatisches Getriebe, welches aufweist:

einen automatischen Schaltmechanismus, welcher Getriebewege für einen Gangwechsel umschaltet, indem sie mehrere Reibungseingriffselemente einrückt oder ausrückt, und somit eine drehzahlveränderte Rotation an ein Rad ausgibt; Hydraulikservos (9, 10), welche die Reibungseingriffselemente einrücken und ausrücken; und ein Umschaltventil (13, 15), welches umschaltet, um hydraulischen Druck mindestens einem von den Hydraulikservos, welcher tatsächlich mindestens eines von den Reibungseingriffselementen einrückt oder ausrückt, zuzuführen oder davon abzuführen, wobei die hydraulische Drucksteuerungseinrichtung für ein automatisches Getriebe aufweist:

eine Druckregelungseinrichtung (SLS, SLU) zum Regeln des hydraulischen Druckes für die Hydraulikdruckservos, welche die Reibungseingriffselemente einrücken oder ausrücken;
eine Eingangsrotationsdrehzahl-Detektionseinrichtung (5) zum Detektieren einer Rotationsdrehzahl der Eingangsrotation;
eine Eingangsdrehmoment-Berechnungseinrichtung (1a) zum Berechnen eines Eingangsdrehmoments des automatischen Schaltmechanismus auf der Basis eines Fahrzustandes eines Fahrzeugs;

**gekennzeichnet durch**:

eine Sollwert-Hydraulikdruck-Berechnungseinrichtung (lb) zum Berechnen eines Sollwert-Hydraulikdruckes ($P_{TA}$) gemäß dem Eingangsdrehmoment für einen Zustand unmittelbar bevor sich die Eingangsdrehzahl zu verändern beginnt; und
eine hydraulische Drucksteuerungseinrichtung (1c) zum Ausgeben eines Signals an die Druckregelungseinrichtung, um so einen ersten Übergangsabschnitt bereitzustellen, in welchem der hydraulische Druck auf den Sollwert-Hydraulikdruck mit einem vorbestimmten Gradienten verändert wird, und einen zweiten Übergangsabschnitt, in welchem der hydraulische Druck von dem Sollwert-Hydraulikdruck mit einem Gradienten ($\delta P_{TA}$), welcher kleiner als der vorbestimmte Gradient ist, verändert wird.

2. Einrichtung nach Anspruch 1, wobei der erste Übergangsabschnitt mit einer vorbestimmten Zeit ($t_{TA}$) versehen ist, welche unter Berücksichtigung einer Hydraulikdruck-Reaktionsverzögerung bestimmt wird, und der vorbestimmte Gradient auf der Basis der vorbestimmten Zeit und des Sollwert-Hydraulikdrucks ($P_{TA}$) bestimmt wird.

3. Einrichtung nach Anspruch 1 oder 2, wobei der Gradient ($\delta P_{TA}$) des zweiten Übergangsabschnittes auf der Basis einer Sollwertrotationsveränderungsrate ($\omega\alpha'$) ermittelt, welche auftritt, wenn sich die Eingangsrotationsdrehzahl ($N_T$) um einen vorbestimmten Betrag verändert ($dN_S$).

4. Einrichtung nach einem der Ansprüche 1 bis 3, wobei sich der zweite Übergangsabschnitt erstreckt, bis die Rotationsdrehzahländerung ($\Delta N$) der Eingangsrotation zu einer den Rotationsveränderungsstartpunkt bestimmenden Rotationsdrehzahl ($dN_S$) wird, welche von der Eingangswellen-Rotationsdrehzahl-Detektionseinrichtung (5) detektierbar ist.

5. Einrichtung nach einem der Ansprüche 1 bis 4, wobei die hydraulische Drucksteuerungseinrichtung in einer Trägheitsphase als einen Sollwert ($\omega a'$, $\omega t'$) eine Rotationsveränderungsrate ($\omega'$) der Eingangsrotationsdrehzahl verwendet und wobei die hydraulische Drucksteuerungseinrichtung so eingestellt ist, daß sich der Sollwert allmählich während der Anfangs- und Endperioden der Trägheitsphase verändert.

6. Einrichtung nach Anspruch 4 oder 5, wobei die hydraulische Drucksteuerungseinrichtung die Zeit ($t_s$) des zweiten Übergangsabschnittes mißt und den Sollwertdruck-Hydraulikdruck ($P_{TA}$) durch Lernen in Abhängigkeit von der gemessenen Zeit korrigiert.

7. Einrichtung nach einem der Ansprüche 4 bis 6, wobei die hydraulische Drucksteuerungseinrichtung eine Rotations drehzahlveränderungsrate ($\omega s'$) der Eingangsrotationsdrehzahl am Ende des zweiten Übergangsabschnittes detektiert, und den Gradienten ($\delta P_{TA}$) des zweiten Übergangsabschnittes, durch Lernen in Abhängigkeit von der detektierten Veränderungsrate korrigiert.

8. Einrichtung nach einem der Ansprüche 4 bis 7, wobei die hydraulische Drucksteuerungseinrichtung eine Zeit ($t_s$) des zweiten Übergangsabschnittes mit der vorbestimmten Zeit ($t_{aim} + \Delta t_0$) unter Berücksichtigung einer Hydraulikdruck-Reaktionsverzögerung vergleicht und den Sollwert-Hydraulikdruck ($P_{TA}$) und Gradienten ($\delta P_{TA}$) des zweiten Übergangsabschnittes durch Lernen auf der Basis des Vergleichs korrigiert.

9. Einrichtung nach einem der Ansprüche 4 bis 8, wobei die hydraulische Drucksteuerungseinrichtung einen hydraulischen Druck an die Hydraulikservos (9, 10) liefert, so daß die Hydraulikservos einen Kolbenhub abschließen, bevor der erste Übergangsabschnitt startet, und wobei die hydraulische Drucksteuerungseinrichtung eine Rotationsdrehzahlveränderungsrate ($\omega s'$) der Eingangsrotationsdrehzahl und eine Zeit ($t_s$) des zweiten Übergangsabschnittes am Ende des zweiten Übergangsabschnittes detektiert, und die Kolbenhubzeit ($t_{SE}$) der Hydraulikservos durch Lernen in Abhängigkeit von der detektierten Rotationsdrehzahlveränderungsrate und der detektierten Zeit korrigiert.

10. Hydraulische Drucksteuerungseinrichtung für ein automatisches Getriebe, wobei die Reibungseingriffselemente, welche eingerückt und ausgerückt werden, zwei Reibungseingriffselemente umfassen, welche gleichzeitig betätigt werden, und der hydraulische Druck ($P_A$) des Hydraulikservos für eines von den zwei Reibungseingriffselementen durch eine Konstruktion gesteuert wird, welche nach einem der Ansprüche 1 bis 9 definiert ist, und der Hydraulikservo für das andere von den zwei Reibungseingriffselementen auf der Basis eines hydraulischen Drucks gesteuert wird, welcher unter Verwendung einer vorbestimmten relationalen Gleichung ($[T_b, P_B,]S_{58}$), welche von dem hydraulischen Druck des Hydraulikservos für das eine von den zwei Reibungseingriffselementen abhängt, berechnet wird.

11. Einrichtung nach Anspruch 10, wobei die relationale Gleichung auf einen vorbestimmten Koeffizienten ($S_{1U}$, $S_{2U}$, $S_{1D}$, $S_{2D}$) bezogen ist, welcher gemäß einem Hemmungsmaß von dem einen und dem anderen der zwei Reibungseingriffselemente bestimmt wird.

**Revendications**

1. Appareil de commande de pression hydraulique pour transmission automatique, comprenant : un mécanisme de passage automatique qui change de chemin de transmission pour effectuer un passage de vitesse en mettant en prise et en dégageant une pluralité d'éléments de friction et qui délivre la rotation, dont on a ainsi changé la vitesse, à une roue; des servomécanismes hydrauliques (9, 10) qui mettent en prise et dégagent lesdits éléments de friction; et une vanne inverseuse (13, 15) qui commute pour fournir une pression hydraulique à ou la décharger d'au moins un desdits servomécanismes hydrauliques c'est-à-dire pour réellement mettre en prise et dégager au moins un desdits éléments de friction, ledit appareil de commande de pression hydraulique pour transmission automatique comprenant :

un moyen de régulation de pression (SLS, SLU) pour réguler la pression hydraulique délivrée aux servomécanismes de pression hydraulique qui mettent en prise et dégagent les éléments de friction,
un moyen de détection (5) de vitesse de rotation d'entrée pour détecter une vitesse de rotation de ladite rotation d'entrée, un moyen de calcul de couple d'entrée (la) pour calculer un couple d'entrée dudit mécanisme de passage automatique basé sur une condition de marche d'un véhicule,

**caractérisé par**

un moyen de calcul de pression hydraulique cible (16) pour calculer une pression hydraulique cible ($P_{TA}$) en fonction du couple d'entrée, pour une condition immédiatement antérieure au début du changement de ladite vitesse de rotation d'entrée, et

un moyen de commande de pression hydraulique ($I_C$) pour envoyer un signal audit moyen de régulation de pression de façon à fournir une première section de balayage dans laquelle on fait varier la pression hydraulique jusqu'à ladite pression hydraulique cible avec un gradient déterminé au préalable et une seconde section de balayage dans laquelle on fait varier la pression hydraulique à partir de ladite pression hydraulique cible avec un gradient ($\delta P_{TA}$) qui est inférieur au gradient déterminé au préalable.

2. Appareil de commande de pression hydraulique pour transmission automatique selon la revendication 1, dans lequel ladite première section de balayage est munie d'un temps déterminé au préalable ($t_{TA}$) établi en considérant un délai de réponse de pression hydraulique, et ledit gradient déterminé au préalable est établi en se basant sur ledit temps déterminé au préalable et sur ladite pression hydraulique cible ($P_{TA}$).

3. Appareil de commande de pression hydraulique pour transmission automatique selon la revendication 1 ou 2, dans lequel ledit gradient ($\delta P_{TA}$) de ladite seconde section de balayage est établi en se basant sur un taux de variation de rotation cible ($\omega a'$) qui se produit quand ladite vitesse de rotation d'entrée ($N_T$) varie d'une quantité déterminée au préalable ($dN_S$).

4. Appareil de commande de pression hydraulique pour transmission automatique selon l'une quelconque des revendications 1 à 3, dans lequel ladite seconde section de balayage s'étend jusqu'à ce que la variation de vitesse de rotation ($\Delta N$) de ladite rotation d'entrée devienne un début de changement de rotation qui détermine une vitesse de rotation ($dN_S$) qui est détectable par ledit moyen de détection (5) de vitesse de rotation d'arbre d'entrée.

5. Appareil de commande de pression hydraulique pour transmission automatique selon l'une quelconque des revendications 1 à 4, dans lequel dans une phase d'inertie, ledit appareil de commande de pression hydraulique utilise comme valeur cible ($\omega a'$, $\omega t'$) un taux de variation de rotation ($\omega'$) de ladite vitesse de rotation d'entrée, et dans lequel ledit moyen de commande de pression hydraulique est réglé de telle manière que ladite valeur cible change graduellement pendant les périodes de début et de fin de ladite phase d'inertie.

6. Appareil selon la revendication 4 ou 5, dans lequel ledit appareil de commande de pression hydraulique mesure la durée ($t_S$) de ladite seconde section de balayage, et corrige ladite pression hydraulique cible ($P_{TA}$) par apprentissage en fonction de la durée mesurée.

7. Appareil selon l'une quelconque des revendications 4 à 6, dans lequel ledit appareil de commande de pression hydraulique détecte un taux de variation de vitesse de rotation ($\omega s'$) de ladite vitesse de rotation d'entrée à la fin de ladite seconde section de balayage, et corrige le gradient ($\delta P_{TA}$) de ladite seconde section de balayage par apprentissage en fonction du taux de variation détecté.

8. Appareil selon l'une quelconque des revendications 4 à 7, dans lequel ledit appareil de commande de pression hydraulique compare une durée ($t_S$) de ladite seconde section de balayage avec la durée déterminée au préalable ($T_{aim} + \Delta t_0$) établie en considérant un délai de réponse de pression hydraulique, et corrige ladite pression hydraulique cible ($P_{TA}$) et le gradient ($\delta P_{TA}$) de ladite seconde section de balayage par apprentissage basé sur la comparaison.

9. Appareil selon l'une quelconque des revendications 4 à 8, dans lequel ledit appareil de commande de pression hydraulique fournit une pression hydraulique aux dits servomécanismes hydrauliques (9, 10) de manière telle que les servomécanismes hydrauliques vont terminer une course de piston avant que ladite première section de balayage ne commence, et dans lequel ledit appareil de commande de pression hydraulique détecte un taux de variation de vitesse de rotation ($\omega s'$) de ladite vitesse de rotation d'entrée et une durée ($t_S$) de ladite seconde section de balayage à la fin de ladite seconde section de balayage, et corrige la durée de course de piston ($t_{SE}$) desdits servomécanismes hydrauliques par apprentissage en fonction du taux de variation de vitesse de rotation détecté et de la durée détectée.

**10.** Appareil de commande de pression hydraulique pour transmission automatique, dans lequel lesdits éléments de friction qui sont mis en prise et dégagés comprennent deux éléments de friction que l'on actionne simultanément, et la pression hydraulique ($P_A$) du servomécanisme hydraulique pour l'un desdits deux éléments de friction est commandée par une structure définie par l'une quelconque des revendications 1 à 9, et le servomécanisme hydraulique pour l'autre desdits deux éléments de friction est commandé en se basant sur une pression hydraulique calculée en utilisant une équation déterminée au préalable ($T_B'$, $P_B$, S58) qui dépend de la pression hydraulique du servomécanisme hydraulique pour ledit un des deux éléments de friction.

**11.** Appareil de commande de pression hydraulique pour transmission automatique selon la revendication 10, dans lequel ladite équation se rapporte à un coefficient déterminé au préalable ($S_{1V}$, $S_{2V}$, $S_{1D}$, $S_{2D}$) établi en fonction d'un degré de lien dudit un et dudit autre desdits deux éléments de friction.

# FIG. 1

EP 0 780 602 B1

**E C U** — 1

1a — INPUT TORQUE CALCULATION MEANS

1b — TARGET HYDRAULIC PRESSURE CALCULATION MEANS

1c — HYDRAULIC PRESSURE CONTROL MEANS
- FIRST SWEEP SECTION
- SECOND SWEEP SECTION

2 — ENGINE SPEED SENSOR

3 — THROTTLE OPENING SENSOR

5 — TRANSMISSION INPUT SHAFT ROTATIONAL SPEED SENSOR

6 — VEHICLE SPEED SENSOR

7 — OIL TEMPERATURE SENSOR

SOLENOID SLS

SOLENOID SLU

# FIG. 2

EP 0 780 602 B1

# FIG. 3

# FIG. 4

```
        ( ENGAGE-SIDE P_A FOR UPSHIFT )
                       │
        ┌──────────────────────────────┐
        │   START MEASURING TIME t=0    │── S1
        └──────────────────────────────┘
                       │
        ┌──────────────────┐
   ┌───▶│     P_A = P_S1    │── S2
   │    └──────────────────┘
   │                │
   │          ╱─────────╲
   │         ⟨  t ≧ t_SA  ⟩── S3
   │          ╲─────────╱
   │                │
   │    ┌──────────────────────────────────────────┐
   │ ┌─▶│ SWEEP DOWN WITH GRADIENT OF (P_S1-P_S2)/t_SB │── S4
   │ │  └──────────────────────────────────────────┘
   │ │            │
   │ │      ╱──────────╲
   │ │     ⟨  P_A ≦ P_S2  ⟩── S5
   │ │      ╲──────────╱
   │ │            │
   │ │  ┌──────────────────┐
   │ │ ▶│    P_A = P_S2     │── S6
   │ │  └──────────────────┘
```

$P_A = P_{S1}$ —— S2

$t \geqq t_{SA}$ —— S3

SWEEP DOWN WITH GRADIENT OF $(P_{S1}-P_{S2})/t_{SB}$ —— S4

$P_A \leqq P_{S2}$ —— S5

$P_A = P_{S2}$ —— S6

$t \geqq t_{SE}$ —— S7

$P_{TA} = f P_{TA}(T_T)$ —— S8

SWEEP UP WITH GRADIENT OF $(P_{TA}-P_{S2})/t_{TA}$ —— S9

$P_A \geqq P_{TA}$ —— S10

$\delta P_{TA} = f \delta P_{TA}(\omega a')$ —— S11

SWEEP UP WITH GRADIENT OF $\delta P_{TA}$ —— S12

$\Delta N \geqq dN_S$ —— S13

(A)

SWEEP UP WITH GRADIENT OF $\delta P_I$ —— S14

$\dfrac{\Delta N \times 100}{N_{TS}(g_i - g_{i+1})} \geqq \alpha_1 [\%]$ —— S15

SWEEP UP WITH GRADIENT OF $\delta P_L$ —— S16

$\dfrac{\Delta N \times 100}{N_{TS}(g_i - g_{i+1})} \geqq \alpha_2 [\%]$ —— S17

$t_F = t$ —— S18

SWEEP UP WITH GRADIENT OF $\delta P_F$ —— S19

$t - t_F \geqq t_{FE}$ —— S20

( E N D )

# FIG. 5

## (a)

$P_{TA}$

$T_T$

## (b)

$\delta P_{TA}$

$\omega a'$

## (c)

TARGET SHIFT START TIME (taim)
/INITIAL VALUE

t

INPUT ROTATIONAL SPEED ($N_T$)

## (d)

SHIFT START DETERMINING ROTATIONAL
SPEED (dN$_s$)

$\triangle N$

INPUT ROTATIONAL SPEED ($N_T$)

## (e)

taim

$N_T$

dNs

P

## (f)

TARGET SHIFT TIME

$t_i$

OIL TEMPERATURE

THR

SPD

# FIG. 6

(a)

THROTTLE OPENING (%)

| | 0 | ••••• | 50 | ••••• | 100 |
|---|---|---|---|---|---|

ENGINE SPEED (rpm)

1000

:

5000 →→→→→→→→→→ **200** (N·m)

:

8000

(b)

TORQUE RATIO

1

O               SPEED RATIO

# FIG. 7

(a)

$a_1 \times t_1$   $a_2 \times t_1$

taim   $t_1$

SECOND SWEEP   FEEDBACK PERIOD

(b)

taim

$a_1 \times t_1$   $a_2 \times t_1$

$a_1 + a_2 = 1.0$

taim : TARGET SHIFT START TIME

$t_1$ : TARGET SHIFT TIME

# FIG. 8

RELEASE-SIDE $P_B$ FOR UPSHIFT

START MEASURING TIME $t=0$ — S21

$P_B = P_W$ — S22

$t \geqq t_{SE}$ — S23

$T_B' = \uparrow T_B(P_A, T_T)$ — S24

$T_B = S_{1U} \times T_B' + S_{2U}$ — S25

$P_B = \uparrow P_B(T_B)$ — S26

$\Delta N \geqq dN_S$ — S27

SWEEP DOWN WITH GRADIENT OF $\delta P_E$ — S28

$P_B \leqq 0$ — S29

END

# FIG. 9

(a)

(b)

# FIG. 10

# FIG. 11

```
( RELEASE-SIDE Pₐ FOR DOWNSHIFT )
              │
   ┌──────────────────────────┐
   │ START MEASURING TIME t=0 │── S30
   └──────────────────────────┘
              │
         ┌──────────┐
         │  Pₐ=Pᵥ   │── S31
         └──────────┘
              │
          ◇ t≧tₛₑ ◇── S32
              │
      ┌──────────────┐
      │ Pₜₐ=†Pₜₐ(Tₜ) │── S33
      └──────────────┘
              │
  ┌────────────────────────────────────────┐
  │ SWEEP DOWN WITH GRADIENT OF (Pₜₐ-Pᵥ)/tₜₐ │── S34
  └────────────────────────────────────────┘
              │
          ◇ Pₐ≦Pₜₐ ◇── S35
              │        S36
      ┌──────────────┐
      │ δPₜₐ=†δPₜₐ(ωa') │
      └──────────────┘
              │                          S37
  ┌──────────────────────────────────┐
  │ SWEEP DOWN WITH GRADIENT OF δPₜₐ  │
  └──────────────────────────────────┘
              │
          ◇ ΔN≧dNₛ ◇── S38
              │                 S39
  ┌──────────────────────────────────┐
  │ SWEEP DOWN WITH GRADIENT OF δPᵢ   │
  └──────────────────────────────────┘
              │
          S40
     ◇ (ΔN×100)/(Nₜₛ(gᵢ₊₁-gᵢ)) ≧ α₁[%] ◇
              │
             (A)
```

$$\frac{\Delta N \times 100}{N_{TS}(g_{i+1}-g_i)} \geqq \alpha_1 [\%]$$

$$\frac{\Delta N \times 100}{N_{TS}(g_{i+1}-g_i)} \geqq \alpha_2 [\%]$$

```
             (A)
              │                          S41
  ┌──────────────────────────────────┐
  │ SWEEP DOWN WITH GRADIENT OF δPₗ   │
  └──────────────────────────────────┘
              │
          S42
     ◇ (ΔN×100)/(Nₜₛ(gᵢ₊₁-gᵢ)) ≧ α₂[%] ◇
              │                          S43
  ┌──────────────────────────────────┐
  │ SWEEP DOWN WITH GRADIENT OF δPբ   │
  └──────────────────────────────────┘
              │
          ◇ Pᵦ≦0 ◇── S44
              │
          ( END )
```

# FIG. 12

```
      ( ENGAGE-SIDE P_B FOR DOWNSHIFT )
                    │
      ┌──────────────────────────┐
      │  START MEASURING TIME t=0 │──── S51
      └──────────────────────────┘
                    │
         ┌──────────────────┐
    ┌───▶│     P_B = P_S1    │──── S52
    │    └──────────────────┘
    │               │
    │          ◇ t ≥ t_SA ◇──── S53
    │               │
    │    ┌───────────────────────────────────────────┐
    └───▶│ SWEEP DOWN WITH GRADIENT OF (P_S1-P_S2)/t_SB │──── S54
         └───────────────────────────────────────────┘
                    │
          ◇ P_B ≤ P_S2 ◇──── S55
                    │
         ┌──────────────────┐
    ┌───▶│     P_B = P_S2    │──── S56
    │    └──────────────────┘
    │               │
    │          ◇ t ≥ t_SE ◇──── S57
    │               │
    │    ┌─────────────────────────┐
    └───▶│  T_B' = ↑T_B(P_A, T_T)   │──── S58
         └─────────────────────────┘
                    │
         ┌─────────────────────────┐
         │  T_B = S_1D × T_B' + S_2D │──── S59
         └─────────────────────────┘
                    │
         ┌─────────────────────────┐
         │     P_B = ↑P_B(T_B)      │──── S60
         └─────────────────────────┘
                    │
     ◇ (ΔN×100)/(N_TS(g_{i+1}-g_i)) ≥ α_1 [%] ◇──── S61
                    │
                   (A)
```

$$\frac{\Delta N \times 100}{N_{TS}(g_{i+1}-g_i)} \geq \alpha_1 \, [\%]$$

```
                   (A)
                    │
         ┌─────────────────────────┐
    ┌───▶│    T_B = ↑T_B(P_A, T_T)  │──── S62
    │    └─────────────────────────┘
    │               │
    │    ┌─────────────────────────┐
    │    │     P_B = ↑P_B(T_B)      │──── S63
    │    └─────────────────────────┘
    │               │
    │  ◇ (ΔN×100)/(N_TS(g_{i+1}-g_i)) ≥ α_2 [%] ◇──── S64
    │               │
    │    ┌──────────────┐
    │    │     t_F = t   │──── S65
    │    └──────────────┘
    │               │
    │    ┌──────────────────────────────────────┐
    └───▶│ SWEEP UP WITH GRADIENT OF δP_F        │──── S66
         └──────────────────────────────────────┘
                    │
          ◇ t - t_F ≥ t_FE ◇──── S67
                    │
                ( E N D )
```

$$\frac{\Delta N \times 100}{N_{TS}(g_{i+1}-g_i)} \geq \alpha_2 \, [\%]$$

# FIG. 13

(a)

(b)

$$P_{TA} = P_{TA} + \Delta P_0$$
$$\delta P_{TA} = \delta P_{TA} + \Delta \delta P_0$$
$$taim = taim + \Delta t_0$$

# FIG. 14

(a)

$N_T$

$\delta P_{TA}$

$P_{TA}$

SIGNAL

ACTUAL HYDRAULIC PRESSURE

(b)

$-\Delta \delta P_0$

$+\Delta t_0$

$+\Delta P_0$